# EUROPEAN PATENT SPECIFICATION

(11) **EP 2 725 923 B1**
(45) Date of publication and mention of the grant of the patent: **12.06.2019**
(21) Application number: 12804441.9
(22) Date of filing: 29.06.2012
(51) Int. Cl.: A23L 29/10, A23J 7/00

(54) **EMULSIFIER COMPOSITIONS AND METHODS OF USING SUCH EMULSIFIER COMPOSITIONS**
EMULGATORZUSAMMENSETZUNGEN UND VERFAHREN ZUR VERWENDUNG DERARTIGER EMULGATORZUSAMMENSETZUNGEN
COMPOSITIONS ÉMULSIFIANTES ET PROCÉDÉS D'UTILISATION DE TELLES COMPOSITIONS ÉMULSIFIANTES

(30) Priority: 30.06.2011 US 201161503101 P
(43) Date of publication of application: 07.05.2014
(73) Proprietor: Archer-Daniels-Midland Company, Decatur, IL 62526 (US)
(72) Inventor: BASEETH, Shireen, Decatur, Illinois 62526 (US); PRICE, Michael, Mt. Zion, Illinois 62549 (US); SEBREE, Bruce, Oakley, Illinois 62501 (US)
(74) Representative: dompatent von Kreisler Selting Werner - Partnerschaft von Patent- und Rechtsanwälten mbB
(86) International application number: PCT/US2012/044810
(87) International publication number: WO 2013/003670

(56) References cited:
- EP-A1- 0 927 518
- WO-A1-2009/021110
- US-A- 4 120 986
- US-A- 4 188 410
- US-A- 5 612 285
- US-A1- 2005 106 287
- US-A1- 2006 121 174
- US-A1- 2008 194 410
- US-A1- 2008 207 777
- US-A1- 2009 285 952
- US-B2- 6 589 586
- US-B2- 7 744 938
- DATABASE WPI Week 200351 Thomson Scientific, London, GB; AN 2003-536364 XP002738613, & JP 2003 088299 A (DAIICHI KOGYO SEIYAKU CO LTD) 25 March 2003 (2003-03-25)

## Description

### CROSS REFERENCE TO RELATED APPLICATIONS

This application claims priority to U.S. Provisional Patent Application No. 61/503,101, filed June 30, 2011.

### TECHNICAL FIELD

Various embodiments of the present disclosure relate to emulsifier compositions that can be used in food or industrial applications. Other embodiments relate to dry emulsifier blends that can be used to make various dry products more dispersible in water.

### BACKGROUND

Dry emulsifiers may be used to aid in hydrating dry products. For instance, in the manufacture of dry baker's yeast, emulsifiers are used to encapsulate the yeast from exposure to moisture and to aid in the rehydration of the yeast in dough.

One emulsifier that has been used in the dry yeast industry is sorbitan monostearate (SMS). SMS is a low HLB (hydrophilic-lipophilic balance) emulsifier (HLB of about 4.5) which has a high melting point and needs to be heated to around 65°C in order to be emulsified in water. The process of combining SMS at temperatures over 60°C with yeast results in a loss of some of the yeast due to thermal degradation.

Another emulsifier that has been used in the dry yeast industry is citric acid ester of monoglyercides (CITREM). CITREMs can be used as a complete or partial replacement of SMS. The CITREMs have a higher HLB than SMS, and are more hydrophilic and water dispersible than the SMS. Esters of saturated fatty acids of glycerol and/or fatty acid esters of propylene glycol may also be used as emulsifiers. However, these emulsifiers suffer from the drawback in that they are very expensive and have limited solubility in cold water.

JP 2003 088299 (Dai Ichi Kogyo Seiyaku Co. Ltd.) discloses an aqueous emulsifier solution containing a sucrose fatty acid ester having HLB of 10 and lecithin.

US 2009/0285952 discloses a transparent emulsified composition and transparent emulsified flavor composition containing enzyme-degraded lecithin.

US 4, 120, 986 discloses a dry emulsifier composition comprising a combination of hydrated mono- and diglycerides, polysorbate 60 and sorbitan monostearate and lecithin concentrate or hydroxylated lecithin.

US 2008/0207777 discloses an emulsifier system comprising a) an ascorbic ester with long-chain fatty acids, b) an ethoxylated sorbitan fatty acid ester and c) a sugar fatty acid ester and emulsions prepared therewith.

US 2008/0194410 discloses compositions comprising an acidifier intermixed with an emulsifier and a co-surfactant that form stable microemulsions in water.

Thus, a need exists for dry emulsifiers that are more functional and cost effective.

### SUMMARY OF THE INVENTION

In each of its various embodiments, the present invention fulfills these needs and discloses emulsifier compositions that are more cost effective and find utility in food and industrial applications.

In one aspect of the present disclosure, an emulsifier composition comprises an emulsifier and lecithin. The emulsifier composition is in a dry from. Uses of the emulsifier composition to disperse a dry compound are also disclosed.

In another aspect of the disclosure, a method comprises mixing a dry emulsifier with a dry lecithin, thus producing an emulsifier blend.

In yet further aspect of the disclosure, a composition comprises de-oiled lecithin and sorbitan monostearate or sucrose ester. The composition is in a dry form.

In an additional aspect of the disclosure, a process for producing a yeast product comprises melting an emulsifier composition comprising lecithin and an emulsifier. suspending the
emulsifier composition in water, mixing the suspended emulsifier composition with a dehydrated yeast, thus producing the yeast product, and drying the yeast product.

The present invention as claimed relates to an emulsifier composition, comprising:
an emulsifier; and lecithin; the emulsifier composition being in a dry form;
wherein the lecithin is de-oiled lecithin and is present in an amount of 30% to 70% by weight of the composition; and wherein the emulsifier is a sucrose ester and is present in an amount of 30% to 70% by weight of the composition; and
wherein the emulsifier composition is a powder.

The present invention further relates to a method of dispersing an agglomerated product comprising: spray agglomerating a wheat protein isolate with 30 °C water, followed by spray agglomerating at 40 °C with a 5 % solids solution of the emulsifier composition according to claim 1; and dispersing the obtained agglomerated product in water at ambient temperature.

Further embodiments of the present invention concern uses of the emulsifier composition as defined in claims 3 to 8.

### DESCRIPTION OF THE DRAWINGS

Figure 1 shows the dispersability of one composition of the present **disclosure.**
Figure 2 shows the surface tensions of various compositions of the present disclosure.
Figure 3 shows the surface tensions of other compositions of the present disclosure.
Figure 4 shows the surface tensions of embodiments of compositions of the present invention.
Figure 5 shows the electrolyte tolerance of embodiments of compositions of the present invention.
Figure 6 shows a graphical representation of the wettability of a composition of one aspect of the present disclosure.

### DETAILED DESCRIPTION OF THE INVENTION

The embodiments disclosed herein are directed to compositions and methods that comprise a composition comprising a lecithin and another emulsifier that forms a dry emulsifier blend. The dry emulsifier blend of the invention is a powder and may have a moisture content of less than 5% by weight. The particles of the composition may have a mean particle
size of between 5 and 2000 microns, and in another embodiment has a mean particle size of between 10 and 300 microns.

In one aspect of the present disclosure, lecithin is mixed with a low HLB emulsifier and in other aspect, the lecithin is mixed with a high HLB emulsifier. In various aspects, the
composition is a blend of lecithin in amounts ranging from 5 to 95% by weight, 10 to 90% by weight, from 20% to 80% by weight of the disclosed compositions, and in certain aspects from 30% to 70% by weight; and the other emulsifier is present in amounts ranging from 5 to 95% by weight, 10 to 90% by weight, from 20% to 80% by weight of the disclosed compositions, and in certain aspects from 30% to 70% by weight. In the present invention as claimed, the lecithin is present in an amount of 30% to 70%
by weight of the composition and the emulsifier is present in an amount of 30% to 70% by weight of the composition.

Lecithin is a lipid substance found in animal and plant tissues such as, for example, egg yolk, soybean, and canola or rapeseed. Lecithin includes constituents including, but not limited to, phospholipids, such as, for example, phosphatidyl choline ("PC"), phosphatidyl inositol ("PI"), and phosphatidyl ethanolamine ("PE"). The amphiphilic properties of lecithin make it an effective processing aid, emulsifier, dispersant, and/or surfactant. Lecithin is also a natural ingredient than can form nanodispersions in aqueous mediums and carry high loads of actives. But, in such aqueous mediums, lecithin tends to have limited tolerance to pH and electrolytes.

Lecithins suitable for use in the disclosed compositions and methods include, but are not limited to, crude filtered lecithin, fluid lecithin, de-oiled lecithin, chemically and/or enzymatically modified lecithin, standardized lecithin, and blends of any thereof. Lecithins employed in the present disclosure generally tend to have a hydrophilic-lipophilic balance ("HLB") value ranging from 1.0 to 10.0 depending on the processing conditions and additives used to obtain and produce the lecithin. For example, crude filtered lecithin has an HLB value of approximately 4.0 and favors the formation of water-in-oil emulsions. Standardized lecithin includes co-emulsifiers having HLB values ranging from 10.0 to 24.0, which results in lecithin compositions having HLB values of 7.0 to 12.0 and favoring oil-in-water emulsions. Any lecithin or combinations of lecithins are suitable for use in the disclosed compositions and methods regardless of the initial HLB value of the lecithin. Lecithins useful in the disclosed compositions and methods may comprise co-emulsifiers having a hydrophilic-lipophilic balance value ranging from 10.0 to 24.0, and in certain embodiments 10.0 to 18.0.

However, the lecithin of the present invention is de-oiled lecithin. US Patent 6,140,519, assigned to Archer-Daniels-Midland Company, assignee of the present application, describes processes for producing de-oiled lecithins which may be used in the present application.

ULTRALEC brand de-oiled lecithins available from Archer-Daniels-Midland Company of Decatur, IL, may be used in the compositions and methods of the present invention. ULTRALEC brand de-oiled lecithins have a minimum of 97% acetone insolubles, maximum of 1% moisture, maximum of 0.05% hexane insolubles, and an effective HLB of 7.

The emulsifier and/or surfactant properties of an amphiphilic substance such as lecithin may be predicted by its hydrophilic-lipophilic balance ("HLB") value. The HLB value may function as an index of the relative preference of an amphiphilic substance for oil or water - the higher the HLB value, the more hydrophilic the molecule; the lower the HLB value, the more hydrophobic the molecule. A description of HLB values is provided in U.S. Pat. No., 6,677,327. HLB is also described in Griffin, "Classification of Surface-Active Agents by 'HLB,"' J. Soc. Cosmetic Chemists 1 (1949); Griffin, "Calculation of HLB Values of Non-Ionic Surfactants," J. Soc. Cosmetic Chemists 5 (1954); Davies, "A quantitative kinetic theory of emulsion type, I. Physical chemistry of the emulsifying agent," Gas/Liquid and Liquid/Liquid Interfaces, Proceedings of the 2d International Congress on Surface Activity (1957); and Schick, "Nonionic Surfactants: Physical Chemistry", Marcel Dekker, Inc., New York, N.Y., pp. 439-47 (1987).

The present disclosure is also directed to methods of preparing the disclosed compositions. In one aspect, a dry form of a lecithin is mixed with a dry form of an emulsifier. In another aspect, the dry lecithin and the dry emulsifier may be ground together to obtain a desired particle size, such as a mean particle size of between 10 and 300 microns.

In one aspect of the present disclosure, the emulsifier mixed with the lecithin is a low HLB emulsifier including, but not limited to, sorbitan monostearate, and in another aspect, the
emulsifier mixed with the lecithin is a high HLB emulsifier including, but not limited to, a sucrose ester. The high HLB emulsifier may have an HLB value of between 10-18 or between 14-18 and the low HLB emulsifier may have an HLB value of between 3-9 or between 3-6. In other
aspects, the emulsifier may be sorbitan monostearate, a sucrose ester, an
alkylpolyglycoside, a sorbitan ester, a polyglycerol ester, a polyol ester, an isosorbide ester, an alkylpolyglucoside, or combinations of any thereof. In yet an additional aspect, the emulsifier may be cationic, anionic, nonionic, or zwitterionic. In the present invention as claimed, the emulsifier is a sucrose ester.

In another aspect of the disclosure, the emulsifier mixed with the lecithin may be an alkylpolyglycoside (APG), which may have utility in a number of agricultural applications such
as water dispersible pesticide dispersants. A wettable agricultural compound may be mixed with the emulsifier and/or lecithin described herein and milled to a fined particle size for addition to water, thus producing a dispersible agricultural product. The wettable agricultural compound may be a water dispersible granule. In one aspect, the agricultural compound may be an agricultural sulfur product and used as a nutrient, soil amendment, or pesticide. In a further
aspect, the dispersible agricultural product may be used on a vine crop including, without limitation, grapes, tomatoes, or peanuts.

The embodiments disclosed herein are also directed to methods of using the disclosed compositions. In various aspects, the disclosed compositions may be used in food systems to instantize food ingredients. The food ingredients may include: cocoa products including, but not limited to, cocoa powder; proteins including, but not limited to, wheat proteins, soy proteins, canola proteins, dairy proteins, sodium caseinates, milk proteins, egg proteins, and whey proteins; milk powder; nutraceuticals including, but not limited to, sterols and/or sterol esters; minerals; vitamins; high fat food ingredients; high protein food ingredients; and dehydrated yeast. The emulsifier composition may also be used in conjunction with vegetable oils to produce emulsions. The disclosed compositions may also be used in cosmetics and personal care products, or even agricultural products.

In another embodiment, the compositions of the present invention may be used in a process for producing a dehydrated yeast product. Such process may include providing a yeast having desired moisture and/or protein content. The yeast may be crumbled and/or mixed with an emulsifier composition of the present invention. The emulsifier may be prepared by melting the emulsifier composition and suspending the melted emulsifier composition in water with mixing, thus forming an emulsion. Since the emulsifier compositions of the present invention melt at a lower temperature than conventional emulsifiers such as sorbitan monostearate, it is expected that the yeast will be subjected to less thermal degradation and be more viable. This emulsion is added to yeast at an amount of up to 0.25% on a dry weight basis. The yeast/emulsion combination may be extruded through a screen to form particles of the yeast/emulsifier composition. This yeast/emulsifier composition may be dried, collected, and packed.

In a further embodiment, the emulsifier composition may be used in dry bakery mixes for producing cakes, muffins, cookies, bread, pie crust, biscuits, pancakes, or other bakery products. In such mixes, the emulsifier composition may help disperse food ingredients including, but not limited to, a cocoa product, a sterol, a vitamin, a mineral, milk powder, a fat containing product, a protein containing ingredient, a high fat milk powder, modified starch, and a dehydrated yeast.

### EXAMPLES.

The following exemplary, non-limiting examples are provided to further describe the embodiments presented herein. Those having ordinary skill in the art will appreciate that variations of these Examples are possible within the scope of the invention.

### Example 1. (not according to the invention)

Sorbitan monostearate (SMS) is a low HLB water/oil emulsifier that is not soluble/dispersible in cold water and needs to be melted at 60°C to dissolve. However, SMS falls out of solution once it cools. Typically, SMS is used in combination with Polysorbate 60 or 80 to stabilize such emulsions.

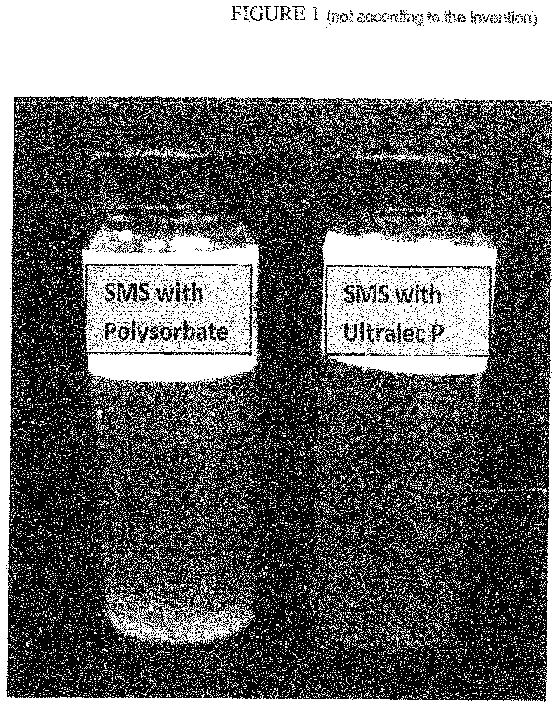

A small amount of Polysorbate 80 (high HLB) and orange red dye (to shown differences) were added to a hot SMS solution and the Polysorbate 80 completely dissolved in the hot SMS. The SMS has no effect in its dispersibility after the addition of the Polysorbate as shown by separation on the left side of FIG. 1 where there is settled material on the bottom of the tube.

An amount of ULTRALEC P brand de-oiled lecithin (available from Archer-Daniels-Midland Company of Decatur, IL) and orange red dye were added to hot solution of SMS and upon cooling, it was unexpectedly noticed that the de-oiled lecithin completely remained dispersible in the SMS with no separation as shown on the right side of FIG. 1. Example 2. (not according to the invention)

Dry blends of de-oiled lecithin (ULTRALEC P brand de-oiled lecithin available from Archer-Daniels-Midland Company of Decatur, IL) and sorbitan monostearate (SMS (available from BASF, USA) were made by weighing out appropriate amounts of the de-oiled lecithin and the sorbitan monostearate to produce the following blends: 30:70 blend of de-oiled lecithin:SMS; 50:50 blend of de-oiled lecithin:SMS; and 70:30 blend of de-oiled lecithin:SMS. The weighed out emulsifiers were made into a fine powder in a lab scale grinder.

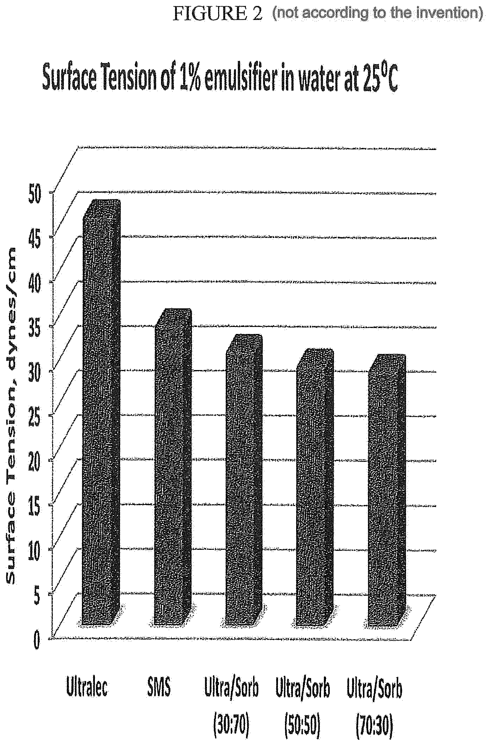

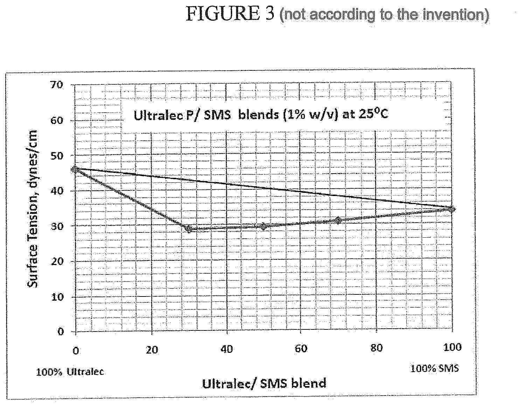

The surface tensions of de-oiled lecithin, SMS, and the three blends in a 1% solution in water were measured at 25°C. The de-oiled lecithin had a surface tension of 45 dynes/cm at 1% and the SMS at a similar concentration had a surface tension of about 28 dynes/cm. The surface tension of de-oiled lecithin, SMS, and the three blends of de-oiled lecithin:SMS at 30:70, 50:50, and 70:30 are shown in FIG. 2. The surface tensions of the three blends were all comparable to the surface tension of SMS alone, which shows a good synergism of such blends. FIG. 3 is a graph showing the synergism of the blends of this Example. It appears that irrespective of the blend ratio, the wetting properties of the emulsifier blends remain relatively unchanged as compared to the SMS alone, but has the added benefit that since de-oiled lecithin melts at a lower temperature than SMS, such blends would work well in the yeast industry or other applications where lower melting temperatures are desired.

### Example 3.

Dry blends of de-oiled lecithin (ULTRALEC P brand de-oiled lecithin available from Archer-Daniels-Midland Company of Decatur, IL) and sucrose ester L-1695, a sucrose laurate (available from Mitsubishi-Kagaku Foods Corporation, USA) were made by weighing out appropriate amounts of the de-oiled lecithin and the sucrose ester to produce the following blends: 10:90 blend of sucrose ester:de-oiled lecithin; 30:70 blend of sucrose ester:de-oiled lecithin; 50:50 blend of sucrose ester:de-oiled lecithin; 70:30 blend of sucrose ester:de-oiled lecithin; and 90:10 blend of sucrose ester:de-oiled lecithin. The weighed out emulsifiers were made into a fine powder in a lab scale grinder.

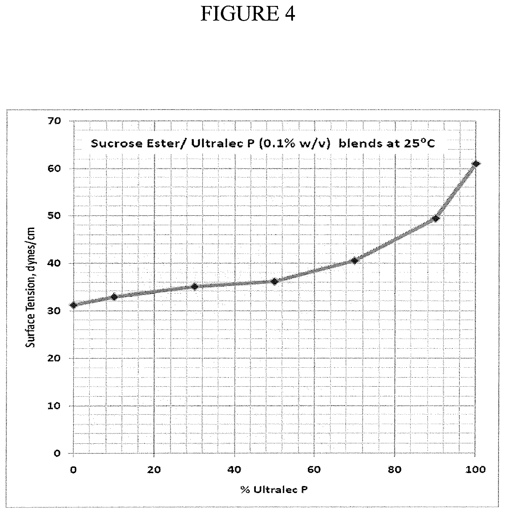

0.1% solutions of de-oiled lecithin, sucrose ester, and the five sucrose ester:de-oiled lecithin blends were prepared. The surface tension of each of the solutions was measured at 25°C. The surface tensions are shown in FIG. 4 with the far left point being 100% sucrose ester and the far right point being 100% de-oiled lecithin, with the varying amounts in between. The de-oiled lecithin added to the sucrose ester does not substantially alter the properties of the emulsifier combination as compared to the sucrose ester itself. The sucrose ester L-1695 (sucrose laurate with 80% monoester) has a HLB of about 16 and a surface tension of about 32 dynes/cm, but also has high foaming. Adding the de-oiled lecithin to the sucrose ester maintains the surface tension to be comparable to that of the sucrose ester alone, but also reduces the foaming. Also, since sucrose esters perform well at low pH and high electrolyte concentrations, it is expected that the de-oiled lecithin/sucrose ester combination would also work well under such pH and electrolyte concentrations.

### Example 4.

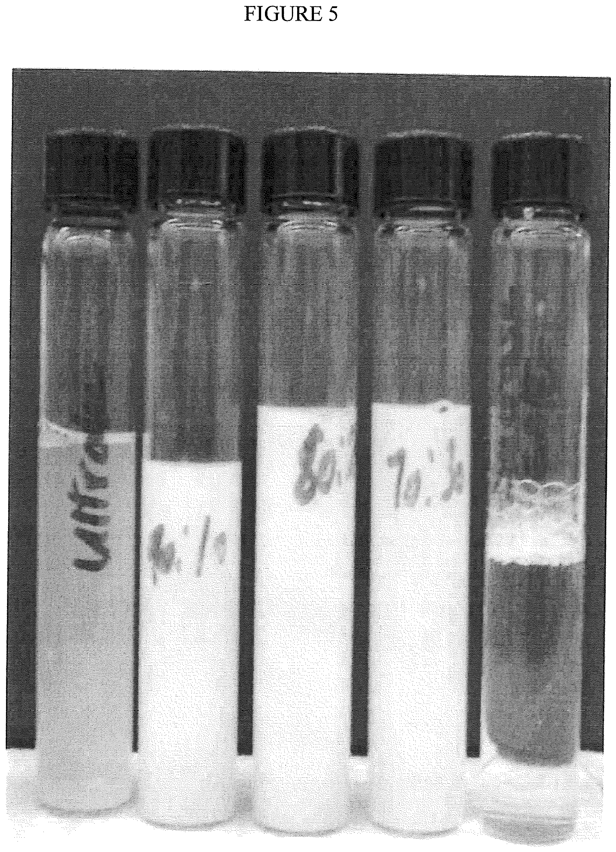

1% w/v solutions of ULTRALEC P brand de-oiled lecithin, sucrose ester, 90:10 blend of de-oiled lecithin:sucrose ester; 80:20 blend of de-oiled lecithin:sucrose ester; 70:30 blend of de-oiled lecithin:sucrose ester were prepared in the presence of 1% sodium chloride. FIG. 5 shows that the de-oiled lecithin by itself did not show electrolyte tolerance as evidenced by the settling of material at the bottom of the tube, but the blends of the de-oiled lecithin:sucrose ester did show electrolyte tolerance as evidenced by the uniform color and lack of material settled at the bottom of the tubes. From left to right in FIG. 5: de-oiled lecithin; 90:10 blend of de-oiled lecithin:sucrose ester; 80:20 blend of de-oiled lecithin:sucrose ester; 70:30 blend of de-oiled lecithin:sucrose ester; and sucrose ester.

### Example 5.

SMARTBIND brand wheat protein isolate (available from ADM Milling Company of Overland Park, Kansas) was agglomerated with water and an emulsifier solution comprising de-oiled lecithin/sucrose ester or lecithin/polyglycerol ester. The de-oiled lecithin was ULTRALEC P brand de-oiled lecithin (available from Archer-Daniels-Midland Company of Decatur, Illinois). The lecithin was YELKIN SS brand lecithin (available from Archer-Daniels-Midland Company of Decatur, Illinois) and the polyglycerol ester was POLYALDO 10-1-CC KFG brand polyglycerol ester (available from Lonza Group Ltd. of Basel, Switzerland).

The wheat protein isolate was spray agglomerated with 30°C water, followed by spray agglomeration with the emulsifier solution (5% solids) at 40°C in the amounts shown in Table 1.

**Table 1.**

| Run | SmartBind (grams) | Total emulsifier (grams) | De-oiled lecithin (%) | Sucrose Esters (%) | Batch Weight (grams) | Emulsifier (%) | Water Applied (30°) | Emulsifier dry solids (grams) | Water (grams) | Emulsifier solution (grams) |
|---|---|---|---|---|---|---|---|---|---|---|
| 1 | 985.0 | 15.0 | 100.0 | 0.0 | 1000.0 | 1.50 | 150.0 | 15.0 | 285.0 | 300.0 |
| 2 | 992.5 | 7.5 | 70.0 | 30.0 | 1000.0 | 0.75 | 300.0 | 7.5 | 142.5 | 150.0 |
| 3 | 980.0 | 20.0 | 100.0 | 0.0 | 1000.0 | 2.00 | 50.0 | 20.0 | 380.0 | 400.0 |
| 4 | 992.5 | 7.5 | 50.0 | 50.0 | 1000.0 | 0.75 | 300.0 | 7.5 | 142.5 | 150.0 |
| 5 | 992.5 | 7.5 | 90.0 | 10.0 | 1000.0 | 0.75 | 300.0 | 7.5 | 142.5 | 150.0 |
| 6 | 992.5 | 7.5 | 90.0 (lecithin, not de-oiled) | 10.0 (polyglycerol ester, not sucrose) | 1000.0 | 0.75 | 300.0 | 7.5 | 142.5 | 150.0 |

After agglomeration, 12.5 grams of the agglomerated products were dispersed into 237.5 grams of water at ambient temperature. The results of the dispersion are shown in Table 2, where the blends of de-oiled lecithin and sucrose esters were more dispersible than the de-oiled lecithin or sucrose esters individually.

**Table 2.**

| Rank in Dispersibility | Run | Comments |
|---|---|---|
| 1 | 2 | More hygroscopic powder |
| 1 | 6 | |
| 2 | 5 | Some ringing of material on beaker |
| 3 | 4 | More hydroscopic powder, ringing of material on beaker |
| 4 | 3 | |
| 5 | 1 | |

### Example 6. (not according to the invention)

A dry blend of 80% de-oiled lecithin (ULTRALEC P brand de-oiled lecithin available from Archer-Daniels-Midland Company of Decatur, IL) and 20% sucrose ester L-1695, a sucrose laurate (available from Mitsubishi-Kagaku Foods Corporation, USA) was made.

A particle size analysis of the sucrose esters was performed which showed the sucrose esters to be a large waxy and flaky type particle having a bulk density of 0.40 g/cc, where greater than 80% of a particle size distribution of the sucrose esters were greater than 40 mesh (400µm). In an initial blending trial of the sucrose esters with the de-oiled lecithin, the blend was not uniform and possibly subject to segregation.

Milling trials of the sucrose esters using a Fitzmill L1-A to mill the sucrose esters were performed to determine the parameters needed to reduce the particle size of the sucrose esters to a size substantially the same as the de-oiled lecithin particles, i.e., such that greater than 80% of the sucrose ester particles had a size smaller than 40 mesh (400µm). Blending trials were performed on the milled sucrose esters and the de-oiled lecithin using a batch v-shell blender and it was found that a two minute batch blend resulted in a visibly uniform blend of the de-oiled lecithin particles and the milled sucrose esters. After such successful blending trial, the blending was scaled up using: a low range MECHATRON LIW brand vibro feeder from Schench AccuRate to feed the de-oiled lecithin at a rate of 14 lb/hr (6.35 kg/hr); a Schenck 302 screw feeder was used to feed the sucrose esters at a rate of 6 lb/hr (2.72 kg/hr); and a zig-zag blender with a shell rpm set at 10 and a theoretical residence time of 5 minutes was used to blend the sucrose esters and de-oiled lecithin. Such blending trials resulted in a composition having uniformly blended 20% sucrose esters and 80% de-oiled lecithin having substantially the same particle size.

### Example 7. (not according to the invention)

High fat milk powder was agglomerated with the de-oiled lecithin/sucrose ester blend of Example 6. The high fat milk powder (fat content of between 25-30%, available from Land-O-Lakes) was spray agglomerated with 30°C water, followed by spray agglomeration with the de-oiled lecithin/sucrose ester blend in solution at 5% solids at 40°C using a Stephan Mixer. The solution was sprayed at a slow rate and constant stirring under vacuum. The agglomerated milk powder was allowed to dry to a moisture level of less than 1%. High fat milk powder was also agglomerated without the de-oiled lecithin/sucrose ester blend as a control.

### Example 8. (not according to the invention)

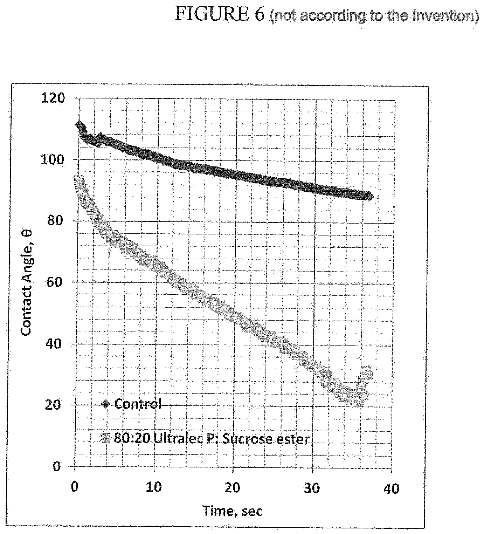

Contact angle measurements were performed on the agglomerated milk powder including the de-oiled lecithin/sucrose ester blend and the control prepared in Example 7 in order to determine the rate of wetting/dispersibility. Measurements were done using a Kruss Easy Drop Angle, Model V-103, instrument. The agglomerated milk powder samples were packed in a rectangular well plate and a water drop was placed on the milk powder bed. A video of each sample was taken using the Kruss Easy Drop Angle instrument and the contact angle versus time was measured. To determine the rate of wetting, the contact angle was plotted versus time. The slope is indicative of the time taken for the sample to disperse in water and allows for the quantification of the wettability of solid powders. The results are presented in Table 3 and Figure 6. The average was determined on more than ten measurements. The higher the slope, the faster the wetting rate of the powder.

**Table 3.**

| Sample | Average Slope, t₀ | Average Correlation | Average Contact Angle, Time 0 seconds | Average Contact Angle, Time 13.5 seconds | Average Contact Angle, Time 40 seconds |
|---|---|---|---|---|---|
| Control (milk powder) | 0.470 | 0.964 | 105.86 | 98.30 | 88.00 |
| Milk powder and de-oiled lecithin/sucrose ester blend | 1.722 | 0.990 | 83.76 | 59.00 | 43.30 |

## Claims

1. An emulsifier composition, comprising:
an emulsifier; and
lecithin;
the emulsifier composition being in a dry form;
wherein the lecithin is de-oiled lecithin and is present in an amount of 30% to 70% by weight of the composition; and
wherein the emulsifier is a sucrose ester and is present in an amount of 30% to 70% by weight of the composition; and
wherein the emulsifier composition is a powder.

2. A method of dispersing an agglomerated product comprising:
spray agglomerating a wheat protein isolate with 30 °C water, followed by spray agglomerating at 40 °C with a 5 % solids solution of the emulsifier composition according to claim 1; and dispersing the obtained agglomerated product in water at ambient temperature.

3. Use of the emulsifier composition according to claim 1 in a process for producing a dehydrated yeast product, wherein the emulsifier is added to the yeast at an amount of up to 0.25 % on a dry weight basis.

4. Use of the emulsifier composition according to claim 1 in dry bakery mixes for producing cakes, muffins, bread, pie crust, biscuits, pancakes, or other bakery products.

5. Use of the emulsifier composition according to claim 1 in food systems to instantize food ingredients.

6. Use of the emulsifier composition according to claim 1 in cosmetics.

7. Use of the emulsifier composition according to claim 1 in personal care products.

8. Use of the emulsifier composition according to claim 1 in agricultural products.

## Patentansprüche

1. Emulgatorzusammensetzung, umfassend:
einen Emulgator; und
Lecithin;
wobei die Emulgatorzusammensetzung in trockener Form vorliegt;
wobei das Lecithin entöltes Lecithin ist und in einer Menge von 30 bis 70 Gew.-% der Zusammensetzung vorhanden ist; und
wobei der Emulgator ein Saccharoseester ist und in einer Menge von 30 bis 70 Gew.-% der Zusammensetzung vorhanden ist; und
wobei die Emulgatorzusammensetzung ein Pulver ist.

2. Verfahren zum Dispergieren eines agglomerierten Produkts, umfassend:
Sprühagglomerieren eines Weizenproteinisolats mit Wasser von 30 °C, anschließend Sprühagglomerieren bei 40 °C mit einer 5% Feststoffanteil enthaltenden Lösung der Emulgatorzusammensetzung gemäß Anspruch 1; und Dispergieren des erhaltenen agglomerierten Produkts in Wasser bei Umgebungstemperatur.

3. Verwendung der Emulgatorzusammensetzung gemäß Anspruch 1 in einem Verfahren zur Herstellung eines dehydratisierten Hefeprodukts, wobei der Emulgator in einer Menge von bis zu 0,25% auf Trockengewichtsbasis zu der Hefe gegeben wird.

4. Verwendung der Emulgatorzusammensetzung gemäß Anspruch 1 in Trockenbackmischungen zur Herstellung von Kuchen, Muffins, Brot, Tortenböden, Biskuits, Pfannkuchen oder anderen Backwaren.

5. Verwendung der Emulgatorzusammensetzung gemäß Anspruch 1 in Lebensmittelsystemen, um Lebensmittelzutaten für Fertiggerichte geeignet zu machen.

6. Verwendung der Emulgatorzusammensetzung gemäß Anspruch 1 in Kosmetika.

7. Verwendung der Emulgatorzusammensetzung gemäß Anspruch 1 in Körperpflegeprodukten.

8. Verwendung der Emulgatorzusammensetzung gemäß Anspruch 1 in landwirtschaftlichen Produkten.

## Revendications

1. Composition d'émulsifiant, comprenant :
un émulsifiant ; et
de la lécithine ;
la composition d'émulsifiant se présentant sous une forme sèche ;
dans laquelle la lécithine est de la lécithine déshuilée et est présente en une quantité de 30 % à 70 % en poids de la composition ; et
dans laquelle l'émulsifiant est un ester de saccharose et est présent en une quantité de 30 % à 70 % en poids de la composition ; et
dans laquelle la composition d'émulsifiant est une poudre.

2. Procédé de dispersion d'un produit aggloméré comprenant :
l'agglomération par pulvérisation d'un isolat de protéine du blé avec de l'eau à 30 °C, suivie par l'agglomération par pulvérisation à 40 °C avec une solution à 5 % de matières solides de la composition d'émulsifiant selon la revendication 1 ; et la dispersion du produit aggloméré obtenu dans de l'eau à température ambiante.

3. Utilisation de la composition d'émulsifiant selon la revendication 1 dans un procédé de production d'un produit de levure déshydraté, dans laquelle l'émulsifiant est ajouté à la levure en une quantité d'au plus 0,25 % sur une base de poids sec.

4. Utilisation de la composition d'émulsifiant selon la revendication 1 dans des mélanges de boulangerie secs destinés à la production de gâteaux, de muffins, de pains, de fonds de tartes, de biscuits, de pancakes, ou d'autres produits de boulangerie.

5. Utilisation de la composition d'émulsifiant selon la revendication 1 dans des systèmes alimentaires destinés à instantanéiser des ingrédients alimentaires.

6. Utilisation de la composition d'émulsifiant selon la revendication 1 dans des produits cosmétiques.

7. Utilisation de la composition d'émulsifiant selon la revendication 1 dans des produits d'hygiène personnelle.

8. Utilisation de la composition d'émulsifiant selon la revendication 1 dans des produits agricoles.
